# EUROPÄISCHE PATENTSCHRIFT

(11) **EP 2 464 551 B1**
(45) Veröffentlichungstag und Bekanntmachung des Hinweises auf die Patenterteilung: **25.02.2015**
(21) Anmeldenummer: 10723134.2
(22) Anmeldetag: 14.06.2010
(51) Int. Cl.: B60T 13/74, B60T 13/58, F16D 65/14

(54) **VERFAHREN ZUM EINSTELLEN DER KLEMMKRAFT EINER HYDRAULISCH UNTERSTÜTZTEN ELEKTROMOTORISCHEN FESTSTELLBREMSE**
METHOD FOR ADJUSTING THE CLAMPING FORCE OF A HYDRAULICALLY ASSISTED ELECTROMOTIVE PARKING BRAKE
PROCÉDÉ POUR RÉGLER LA FORCE DE SERRAGE D'UN FREIN DE STATIONNEMENT COMMANDE PAR UN MOTEUR ELECTRIQUE À ASSISTANCE HYDRAULIQUE

(30) Priorität: 13.08.2009 DE 102009028505
(43) Veröffentlichungstag der Anmeldung: 20.06.2012
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE); BLESSING, Peter, 74078 Heilbronn (DE)
(86) Internationale Anmeldenummer: PCT/EP2010/058274
(87) Internationale Veröffentlichungsnummer: WO 2011/018256

(56) Entgegenhaltungen:
- EP-B1- 1 697 188
- EP-B1- 1 929 170
- DE-A1- 10 345 485
- DE-A1-102006 056 346
- DE-A1-102008 052 847

## Beschreibung

Die Erfindung betrifft ein Verfahren zum Einstellen der von einer hydraulisch unterstützten Feststellbremse ausgeübten Klemmkraft.

### Stand der Technik

Automatische Feststellbremsen bzw. Parkbremsen (APB) umfassen üblicherweise ein Bedienelement, wie z.B. einen Taster, mit dem die Feststellbremse verriegelt oder gelöst werden kann. Bei einer Betätigung des Bedienelements erkennt ein damit verbundenes Steuergerät den Feststellbremswunsch und steuert entsprechend ein Stellglied, wie z.B. eine Hydraulikpumpe oder einen Elektromotor an, um an den Rädern des Fahrzeugs Bremskraft aufzubauen oder die Bremse zu lösen.

Aus dem Stand der Technik sind automatische Parkbremsen (APB) bekannt, bei denen sich Elektromotoren direkt auf dem Bremssattel der Radbremsen (sog. "Motor on Caliper") befinden. Die Elektromotoren wirken über ein Getriebe, wie z. B. einen Spindelantrieb, direkt auf die Bremskolben der hydraulischen Bremsanlage und können somit die Betriebsbremse spannen oder lösen. Die Elektromotoren sind üblicherweise so dimensioniert, dass deren Klemmkraft ausreicht, ein Fahrzeug, wie gesetzlich vorgeschrieben, auf Steigungen von mindestens 20% energielos zu halten.

Darüber hinaus sind Feststellbremssysteme bekannt, bei denen die Elektromotoren schwächer ausgelegt sind. Um dennoch die vorgeschriebene Klemmkraft erreichen zu können, werden die Elektromotoren durch die Hydraulikpumpe der hydraulischen Betriebs-Bremsanlage unterstützt. Während eines Zuspannvorgangs der Feststellbremse werden zunächst die Elektromotoren betätigt und nach einer bestimmten Zeit die Hydraulikpumpe zugeschaltet. Dadurch kann die Klemmkraft bis auf den erforderlichen Wert verstärkt werden.

Die DE 10 2006 056 345 A1 offenbart eine Feststellbremse, bei der die Klemmkraft teilweise von einer elektromotorischen Bremsvorrichtung und teilweise von einer hydraulischen Bremsvorrichtung aufgebracht wird. Bei einem Zuspannvorgang sind sowohl der Elektromotor als auch die hydraulische Bremsvorrichtung aktiv. Am Ende des Zuspannvorgangs blockiert der Elektromotor, ist aber wegen seiner relativ schwachen Auslegung nicht in der Lage, die Bremskraft zu erhöhen. Der Elektromotor wird daher maximal belastet und mit seinem Blockierstrom betrieben.

Die DE 103 45 485 A1 zeigt ebenfalls eine Feststellbremse, bei der die Bremskraft teilweise von einem Elektromotor und teilweise von einer hydraulischen Bremsvorrichtung aufgebracht wird. Bei einem Zuspannvorgang wird zunächst hydraulischer Bremsdruck aufgebaut und nach einer bestimmten Zeit die elektromotorische Bremsvorrichtung zugeschaltet. Durch die Einwirkung des Elektromotors wird zusätzlich die Bremskraft erhöht.

Auch aus der EP 1 929 170 B1 ist eine Feststellbremse bekannt, bei der die Bremskraft teilweise von einem Elektromotor und teilweise von einer hydraulischen Bremsvorrichtung aufgebracht wird.

Bei den genannten APB-Systemen mit hydraulischer Unterstützung ist jedoch problematisch, dass die Gesamt-Klemmkraft nur relativ ungenau oder nur mit hohem sensorischen Aufwand bestimmt werden kann.

### Offenbarung der Erfindung

Es ist daher die Aufgabe der vorliegenden Erfindung, ein Verfahren und eine Vorrichtung zum Einstellen der von einer Feststellbremse ausgeübten Klemmkraft vorzusehen, mittels dessen bzw. derer die Klemmkraft mit geringem Aufwand sehr genau eingestellt werden kann.

Diese Aufgabe wird erfindungsgemäß durch die Merkmale des Anspruchs 1 sowie des Anspruchs 11 gelöst. Weitere Ausgestaltungen der Erfindung sind in den Unteransprüchen wiedergegeben.

Gemäß der Erfindung wird vorgeschlagen, ein Verfahren zum Einstellen der von einer Feststellbremse ausgeübten Klemmkraft (F) zu realisieren, bei dem in einer Betriebsphase, in der sowohl der Elektromotor als auch der Aktuator (z. B. eine Hydraulikpumpe) einer zweiten Bremsvorrichtung gleichzeitig Kraft ausüben, der Stromverbrauch (i) der elektromotorischen Bremsvorrichtung auf einen im Wesentlichen konstanten Wert geregelt wird. Bei konstantem Stromverbrauch sind nämlich das Drehmoment des Elektromotors und damit auch die Drehzahl im Wesentlichen konstant. Aus der konstanten Drehzahl lässt sich dann (unter Berücksichtigung einer Getriebeübersetzung) der vom Bremskolben zurück gelegte Weg sehr genau berechnen. Somit lässt sich eine gewünschte Klemmkraft, die etwa proportional zum Weg ansteigt, genau einstellen. Die Stromregelung hat somit den Vorteil, dass die Klemmkraft sehr genau eingestellt werden kann, ohne eine zusätzliche Sensorik zu erfordern.

Gemäß einer bevorzugten Ausführungsform der Erfindung ist ein Stromregler vorgesehen, der den Aktuator der zweiten (z. B. hydraulischen) Bremsvorrichtung als

(Es folgt die ursprüngliche Beschreibung auf Seite 3)

Stellglied nutzt. Durch Variation des hydraulischen Drucks ist es möglich, den Elektromotor der Feststellbremse mehr oder weniger stark zu entlasten. Das Antriebsmoment des Elektromotors und damit auch sein Stromverbrauch können somit auf einem im Wesentlichen konstanten Wert gehalten werden.

Gemäß der Erfindung wird in der Betriebsphase, in der beide Bremsvorrichtungen gleichzeitig Kraft ausüben, vorzugsweise ein vom Bremskolben zurückgelegter Weg (s), eine Drehzahl (ω) des Elektromotors oder eine andere Größe, mit deren Hilfe sich die Klemmkraft (F) abschätzen lässt, aus dem Stromwert (i) ermittelt.

Gemäß der Erfindung wird die elektromotorische Bremsvorrichtung in einer ersten Betriebsphase eines Zuspannvorgangs vorzugsweise ausschließlich betrieben. Nach Erreichen einer bestimmten Zielklemmkraft (Fm) wird dann vorzugsweise die hydraulische Bremsvorrichtung zugeschaltet. Die Zielklemmkraft kann im Grunde ein beliebiger Schwellenwert sein, der vorzugsweise nahe der maximalen Klemmkraft des Elektromotors liegt. Die tatsächliche Klemmkraft der Feststellbremse wird in der ersten Betriebsphase vorzugsweise aus dem Motorstrom, der Drehzahl und verschiedenen Motorparametern geschätzt.

Während der ersten Betriebsphase, in der die elektromotorische Bremsvorrichtung ausschließlich aktiv ist, wird vorzugsweise die Steigung (m) des Klemmkraftanstiegs ermittelt. Mit Hilfe der Steigung (m) kann schließlich ein Soll-Weg (s_{ch0}) berechnet werden, der vom Bremskolben nach Erreichen der Zielbremskraft (Fm) durchlaufen werden soll, bis die gewünschte Gesamt-Klemmkraft erreicht ist.

Der vom Bremskolben zurückgelegte Weg (s) wird vorzugsweise unter Berücksichtigung des Stromwerts (i) geschätzt. Vorzugsweise wird zunächst die Drehzahl des Elektromotors aus dem Stromwert geschätzt und daraus der zurückgelegte Weg s berechnet. Alternativ kann der zurückgelegte Weg (s) oder die Motordrehzahl (ω) auch mittels eines Inkrementalgebers, der vorzugsweise auf der Motorachse angebracht ist, ermittelt werden. Der Inkrementalgeber kann z. B. auf magnetischer Basis ausgelegt sein. In diesem Fall wird ein wechselndes Magnetfeld, das durch ein magnetisches Polrad bereitgestellt wird, welches z.B. auf der Motorachse oder auf jeder anderen Getriebestufe angeordnet ist, z.B. mittels eines Hall-Elements erfasst. Alternativ kann der Inkrementalgeber auch auf optischer Basis ausgelegt sein. In diesem Fall wird z. B. eine Strichcode-Scheibe, welche vorzugsweise auf der Motorachse oder aber auf jeder anderen Getriebestufe angebracht ist, z.B. mittels optischer Leseelemente erfasst.

Aus dem tatsächlich zurückgelegten Weg und dem Soll-Weg (s_{ch0}) wird vorzugsweise ein Differenzwert (Δs) gebildet und fortlaufend berechnet. So lange der Differenzwert ungleich Null ist, wird die Stromregelung vorzugsweise weiter durchgeführt. Sobald der Differenzwert Null ist, werden der Elektromotor und die Hydraulikpumpe vorzugsweise abgeschaltet.

Der Regelalgorithmus ist vorzugsweise auf einem Steuergerät als Software implementiert. Das Steuergerät hat entsprechende Schnittstellen zu einer Sensorik, z. B. einem Strom- und Spannungssensor, sowie einen Ausgang zur Ausgabe einer Stellgröße für die Hydraulikpumpe oder eines Signals an einen externen Regler.

### Kurze Beschreibung der Zeichnungen

Ausführungsbeispiele, aus denen sich weitere erfinderische Merkmale ergeben können, auf die die Erfindung aber in ihrem Umfang nicht beschränkt ist, sind in den Zeichnungen dargestellt. Es zeigen:
Fig. 1 den zeitlichen Verlauf verschiedener Betriebsgrößen einer Feststellbremse bei einem Zuspannvorgang der Bremse;
Fig. 2 eine schematische Darstellung der Berechnung eines vom Bremskolben zurückzulegenden Soll-Wegs (s_{ch0});
Fig. 3 eine schematische Darstellung einer Strom-Regelung des Motorstroms.

### Ausführungsformen der Erfindung

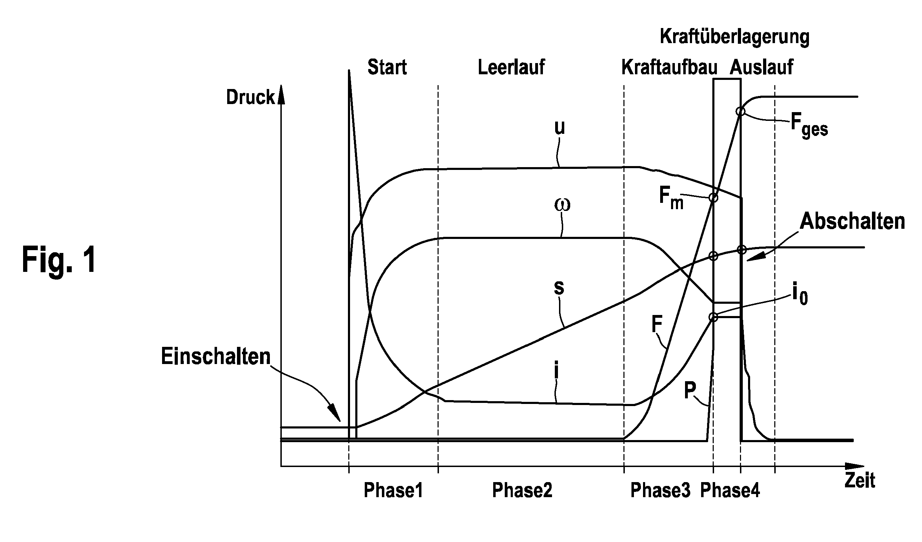

Fig. 1 den zeitlichen Verlauf verschiedener Betriebsgrößen einer Feststellbremse bei einem Zuspannvorgang der Bremse. Der Zuspannvorgang kann im Wesentlichen in vier Phasen unterteilt werden:
Zu Beginn einer Phase 1 wird ein Zuspannwunsch erkannt und der an der Radbremse montierte Elektromotor 1 eingeschaltet. Beim Einschalten des Elektromotors 1 ist ein Einschalt-Strompeak erkennbar. Der Strom i des Elektromotors 1 fällt dann im weiteren Verlauf ab, bis sich am Ende der Phase 1 ein Leerlaufstrom einstellt. Die Drehzahl ω des Elektromotors 1 steigt in Phase 1 an, d. h. der Elektromotor 1 wird beschleunigt. Am Ende der Phase 1 erreicht die Drehzahl ω des Elektromotors 1 eine Leerlaufdrehzahl. Die Spannung u des Elektromotors 1 steigt ebenfalls an. Am Ende der Phase 1 stellt sich eine Leerlaufspannung ein. Durch die Rotation einer Spindel wird eine Mutter in Richtung eines Bremskolbens der Radbremse bewegt. Da die Mutter mit dem Kolbenboden noch nicht in Kontakt steht, ist die Klemmkraft F gleich Null. Der Druck p der Hydraulikpumpe 7 ist in dieser Phase ebenfalls Null.

Phase 2 ist eine Leerlaufphase, in der sich ein Leerlaufstrom, eine Leerlaufspannung und eine Leerlaufdrehzahl einstellen. Die Klemmkraft der Radbremse beträgt in dieser Phase weiterhin Null, da die Mutter mit dem Kolbenboden noch nicht in Kontakt steht. Der Druck p der Hydraulikpumpe 7 ist weiterhin gleich Null.

In Phase 3 erfolgt der Kraftaufbau. Die Mutter steht mit dem Kolbenboden in Kontakt und der Kolben wird durch die Drehung der Spindel gegen die Bremsscheibe gedrückt. Dabei steigt der Strom i des Elektromotors 1 an. Die Spannung u des Elektromotors 1 fällt in dieser Phase aufgrund der Belastung des Elektromotors 1 vom Niveau der Leerlaufspannung leicht ab. Die Drehzahl ω des Elektromotors 1 fällt mit zunehmendem Klemmkraftaufbau ebenfalls ab. Kurz bevor eine vorgegebene Zielklemmkraft Fₘ erreicht ist wird die Hydraulikpumpe 7 zugeschaltet und somit ein hydraulischer Druck p aufgebaut. Die Zielklemmkraft Fₘ kann z. B. einen Wert haben, der nahe der maximalen Klemmkraft des Elektromotors 1 liegt.

Phase 4 beginnt mit Erreichen der Zielklemmkraft Fₘ. In dieser Phase sind beide Bremssysteme aktiv und der Elektromotor 1 wird von der Hydraulikpumpe 7 unterstützt. Die Gesamt-Klemmkraft setzt sich dabei aus einem Anteil des Elektromotors 1 und einem Anteil der Hydraulikpumpe 7 zusammen. Der Strom i₀ des Elektromotors 1 wird in Phase 4 auf einen im Wesentlichen konstanten Wert geregelt. Der hydraulische Druck p steigt solange an, bis eine vorgegebene Gesamt-Klemmkraft erreicht ist. Danach werden der Elektromotor 1 und der Pumpenmotor der hydraulischen Bremsvorrichtung abgeschaltet. Demzufolge fallen der hydraulische Druck p, der Strom i, die Spannung u und die Drehzahl ω des Elektromotors 1 auf Null. Die Gesamt-Klemmkraft F_{ges} wird dabei gehalten.

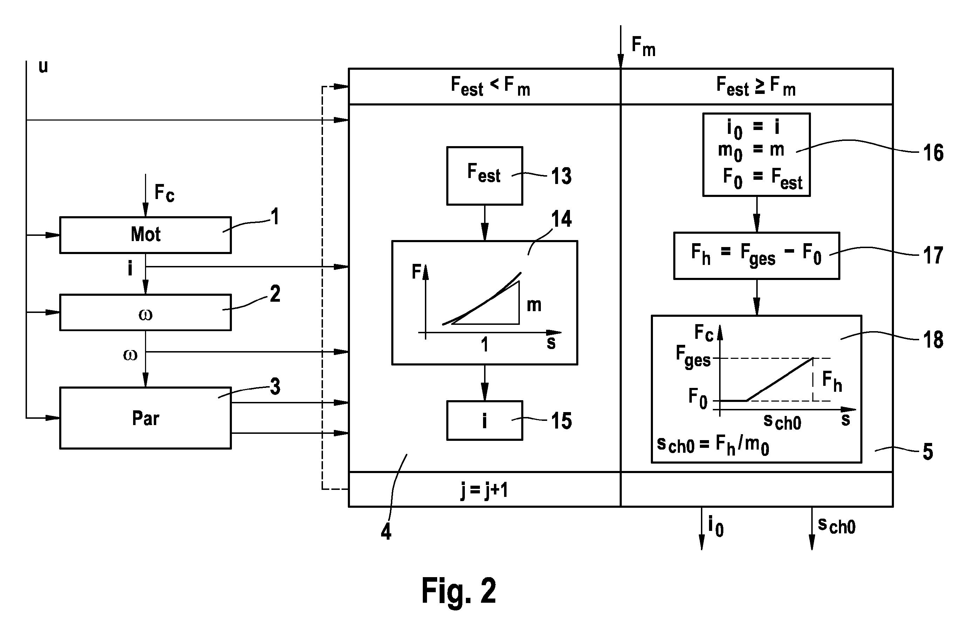

Fig. 2 zeigt eine schematische Darstellung der Berechnung eines vom Bremskolben zurückzulegenden Soll-Wegs s_{ch0}. Der Soll-Weg ist dabei derjenige Weg, der nach Erreichen der Zielbremskraft Fₘ vom Kolben noch zurückgelegt werden soll, um einen bestimmte Gesamt-Klemmkraft zu erreichen.

Im dargestellten Ausführungsbeispiel wird aus dem gemessenen Stromwert i, einer aus dem Strom i geschätzten Drehzahl ω (Block 2) und weiteren Motorparametern (Block 3), wie z. B. einer aktuellen Motorkonstante k_{M} und einem Motorwiderstand R_{M}, das tatsächliche Motormoment geschätzt. Bei bekannter Untersetzung des Getriebes, sowie der Wirkungsgrade der mechanischen Kette kann damit in Schritt 13 die momentane Klemmkraft Fₑₛₜ geschätzt werden. Hierzu ist ein geeigneter iterativer Algorithmus 4 vorgesehen. Dieser Algorithmus 4 berechnet darüber hinaus in Schritt 14 die Steigung m der Klemmkraft über dem Weg s.

Sobald die geschätzte Klemmkraft den Wert der Zielklemmkraft Fₘ erreicht hat, wird der aktuelle Stromwert in Schritt 15 gespeichert und in Schritt 16 als Sollwert i₀ für eine Stromregelung ausgegeben. Bei Erreichen der Zielklemmkraft Fₘ werden in Schritt 16 außerdem noch die aktuelle Steigung m=m₀ und die aktuelle Klemmkraft Fest = F₀ = Fₘ gespeichert. Aus der Steigung m und der gewünschten Gesamt-Klemmkraft F_{ges} wird dann in den Schritten 17 und 18 der Soll-Weg s_{ch0} berechnet, den der Kolben noch zurücklegen muss, um die gewünschte Gesamt-Klemmkraft zu erreichen. Der Soll-Weg s_{ch0} ergibt sich in Schritt 18 aus einer Berechnung s_{ch0} = (F_{ges} - Fₘ) / m, wobei F_{ges} die gewünschte Gesamt-Klemmkraft, Fₘ die Zielklemmkraft und m die Steigung des Kraftanstiegs über dem vom Kolben zurückgelegten Weg s ist.

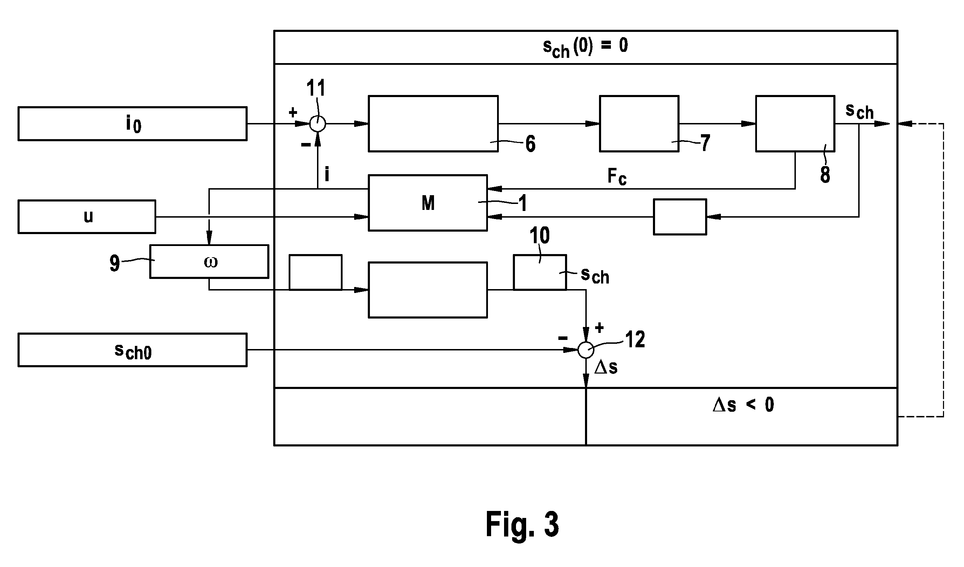

Fig. 3 eine schematische Darstellung einer Strom-Regelung des Motorstroms, bei der der Pumpenmotor der hydraulischen Bremsvorrichtung als Stellglied genutzt wird. Durch Variation des hydraulischen Drucks ist es möglich, den Elektromotor 1 der Feststellbremse mehr oder weniger stark zu entlasten. Das Antriebsmoment des Elektromotors 1 und damit auch der Stromverbrauch können somit auf einem im Wesentlichen konstanten Wert gehalten werden.

Die Regelung umfasst einen Knoten 11, an dem die Regeldifferenz (i₀ - i) gebildet wird. Diese Differenz wird einem Regler 6 (Pumpenmotorsteuerung) zugeführt, der je nach Regelalgorithmus eine bestimmte Stellgröße ausgibt. Im vorliegenden Beispiel bildet der Pumpenmotor 7 der Hydraulikpumpe das Stellglied der Regelung. Die Regelstrecke umfasst ferner den Bremssattel 8 und den Elektromotor 1. Je nach Stärke der hydraulischen Unterstützung stellt sich dadurch ein bestimmter Strom des Elektromotors 1 ein.

Aus dem Strom i wird ferner in Block 9 die Drehzahl ω des Elektromotors 1 geschätzt. Mit dem geschätzten Drehzahlwert kann nun der vom Bremskolben durchlaufene Weg s_{ch} berechnet werden (Block 10). Die gewünschte Gesamt-Klemmkraft ist erreicht, wenn der vom Bremskolben durchlaufene Weg s_{ch} gleich dem Soll-Weg s_{ch0} ist. Um dies zu überprüfen, wird an einem weiteren Knoten 12 ein Differenzwert Δs aus Ist- und Soll-Weg fortlaufend berechnet. Sobald der Differenzwert gleich Null ist, werden der Elektromotor 1 und der Pumpenmotor 7 automatisch abgeschaltet.

Die elektromotorische Feststellbremse wird vorzugsweise nur in solchen Situationen hydraulisch unterstützt, in denen es für die ordnungsgemäße Funktion notwendig ist, z.B. wenn die Steigung der Fahrbahn größer ist als ein bestimmter Wert, z. B. 15%, oder wenn erkannt wird, dass die rein elektromotorische Klemmkraftbereitstellung aus Spannungs- oder Temperaturgründen alleine nicht ausreichend ist. Solange der Fahrer im Fahrzeug verbleibt und die Steigung z. B. <15% ist, wird die Hydraulik vorzugsweise nicht zugeschaltet.

Die elektromotorische Feststellbremse könnte aber auch derart ausgelegt sein, dass die Klemmkraft ausreichend ist, um das Fahrzeug z. B. an Steigungen von bis zu 20% im Stillstand zu halten. Die hydraulische Unterstützung würde in diesem Fall nur zugeschaltet werden, wenn die Steigung z. B. >20% ist, oder eine Klemmkraftreserve, z.B. bei heißer Bremsanlage, bereitgestellt werden soll.

Die Erfindung wurde anhand konkreter Ausgestaltungen der Erfindung näher erläutert, ohne auf die konkrete Ausführungsform begrenzt zu sein.

### Bezugszeichenliste:

- i: Strom des Elektromotors
- i₀: aktueller Strom bei Erreichen der Zielklemmkraft Fₘ
- u: Spannung des Elektromotors
- F: Klemmkraft
- s: Weg der Mutter auf Spindel der elektromechanischen Bremsvorrichtung
- ω: Drehzahl des Elektromotors
- p: Druck der hydraulischen Bremsvorrichtung
- S_{ch0}: zu durchlaufender Soll-Weg des Bremskolbens
- s_{ch}: durchlaufener Weg des Bremskolbens
- Δs: Differenzwert zwischen s_{ch}(j) und s_{ch0}
- Fₑₛₜ: momentane Klemmkraft
- Fₘ: Zielklemmkraft der elektromechanischen Bremsvorrichtung
- F₀: aktuelle Klemmkraft bei Erreichen der Zielklemmkraft Fₘ
- F_{ges}: Zielklemmkraft der elektromechanischen Bremsvorrichtung in Kombination mit der hydraulischen Bremsvorrichtung
- m: Steigung
- m₀: aktuelle Steigung bei Erreichen der Zielklemmkraft Fₘ
- 1: Elektromotor
- 2: Drehzahl-Schätzung
- 3: Motorparameter-Schätzung
- 4: Klemmkraft-Schätzung
- 5: Sollwert-Berechnung
- 6: Pumpenmotor-Steuerung
- 7: Pumpenmotor
- 8: Bremssattel
- 9: Drehzahl-Schätzung
- 10: Weg-Berechnung
- 11: Knoten
- 12: Knoten
- 13-18: Verfahrensschritte

## Patentansprüche

1. Verfahren zum Einstellen der von einer Feststellbremse ausgeübten Klemmkraft (F), wobei die Klemmkraft (F) teilweise von einer elektromotorischen Bremsvorrichtung (1) und teilweise von einer zweiten Bremsvorrichtung (6,7) aufgebracht wird, **dadurch gekennzeichnet, dass** bei einem Zuspannvorgang, in einer Betriebsphase (Phase 4), in der beide Bremsvorrichtungen (1;6,7) gleichzeitig Kraft ausüben, der Stromverbrauch (i) der elektromotorischen Bremsvorrichtung (1) auf einen im Wesentlichen konstanten Wert geregelt wird.

2. Verfahren nach Anspruch 1, **dadurch gekennzeichnet, dass** die zweite Bremsvorrichtung (6,7) eine hydraulische oder pneumatische Bremsvorrichtung ist.

3. Verfahren nach Anspruch 1, **dadurch gekennzeichnet, dass** der Stromverbrauch (i) der elektromotorischen Bremsvorrichtung mit Hilfe einer Regelungsvorrichtung geregelt wird, die den Aktuator der zweiten Bremsvorrichtung als Stellglied nutzt.

4. Verfahren nach Anspruch 1, **dadurch gekennzeichnet, dass** ein von einem Bremskolben zurückgelegter Weg (s), eine Drehzahl (ω) des Elektromotors oder eine andere Größe, aus der sich die Klemmkraft (F) abschätzen lässt, aus dem Stromwert (i) berechnet wird.

5. Verfahren nach einem der vorhergehenden Ansprüche, **dadurch gekennzeichnet, dass** bei einem Zuspannvorgang, in einer ersten Betriebsphase ausschließlich die elektromotorische Bremsvorrichtung betrieben wird und etwa bei Erreichen einer bestimmten Zielklemmkraft (Fₘ) die hydraulische Bremsvorrichtung zugeschaltet wird.

6. Verfahren nach einem der vorhergehenden Ansprüche, **dadurch gekennzeichnet, dass** in einer Betriebsphase, in der ausschließlich die elektromotorische Bremsvorrichtung aktiv ist, die Steigung (m) des Klemmkraftanstiegs ermittelt wird.

7. Verfahren nach Anspruch 5, **dadurch gekennzeichnet, dass** unter Berücksichtigung des Stromwerts (i) ein vom Bremskolben zurückgelegter Weg (s) berechnet wird.

8. Verfahren nach Anspruch 6, **dadurch gekennzeichnet, dass** mit Hilfe der Steigung (m ein Soll-Weg (s_{ch0}) berechnet wird, der vom Bremskolben nach Erreichen einer bestimmten Zielbremskraft (Fₘ) durchlaufen werden soll.

9. Verfahren nach Anspruch 7, **dadurch gekennzeichnet, dass** ein Differenzwert (Δs) aus dem zu durchlaufenden Weg (s_{ch0}) des Bremskolbens und dem bereits durchlaufenen Weg (s_{ch}) des Bremskolbens fortlaufend berechnet wird.

10. Verfahren nach Anspruch 8, **dadurch gekennzeichnet, dass** die Stromregelung der elektromotorischen Bremsvorrichtung so lange ausgeführt bis, bis der Differenzwert (Δs) den Wert Null hat.

11. Steuervorrichtung zum Einstellen der von einer Feststellbremse ausgeübten Klemmkraft (F), **dadurch gekennzeichnet, dass** sie Mittel zum Ansteuern eines Elektromotors (1) der Feststellbremse, Mittel zum Ansteuern eines Aktuators (7) einer zweiten Bremsvorrichtung (6,7), sowie Mittel zum Durchführen einer Stromregelung aufweist, mit denen der Motorstrom (i) des Elektromotors (1) in einer Betriebsphase (Phase 4), in der beide Bremsvorrichtungen (1;6,7) gleichzeitig Kraft ausüben, auf einen im Wesentlichen konstanten Wert geregelt werden kann.

12. Steuervorrichtung nach Anspruch 10, ferner umfassend Mittel zum Durchführen eines der vorstehend beanspruchten Verfahren.

## Claims

1. Method for adjusting the clamping force (F) which is exerted by a parking brake, wherein the clamping force (F) is applied partially by an electromotive braking apparatus (1) and partially by a second braking apparatus (6, 7), **characterized in that**, during a brake application process, the current consumption (i) of the electromotive braking apparatus (1) is regulated at a substantially constant value in an operating phase (phase 4) in which the two braking apparatuses (1; 6, 7) exert force at the same time.

2. Method according to Claim 1, **characterized in that** the second braking apparatus (6, 7) is a hydraulic or pneumatic braking apparatus.

3. Method according to Claim 1, **characterized in that** the current consumption (i) of the electromotive braking apparatus is regulated with the aid of a regulating apparatus which uses the actuator of the second braking apparatus as an actuating element.

4. Method according to Claim 1, **characterized in that** a distance (s) which is covered by a brake piston, a rotation speed (ω) of the electric motor, or another variable from which the clamping force (F) can be estimated is calculated from the current value (i).

5. Method according to one of the preceding claims, **characterized in that**, during a brake application process, only the electromotive braking apparatus is operated in a first operating phase, and the hydraulic braking apparatus is connected approximately when a specific target clamping force (Fₘ) is reached.

6. Method according to one of the preceding claims, **characterized in that** the gradient (m) of the increase in clamping force is determined in an operating phase in which only the electromotive braking apparatus is active.

7. Method according to Claim 5, **characterized in that** a distance (s) which is covered by the brake piston is calculated taking into account the current value (i).

8. Method according to Claim 6, **characterized in that** a desired distance (s_{ch0}) which the brake piston is intended to run through after reaching a specific target braking force (Fₘ) is calculated with the aid of the gradient (m).

9. Method according to Claim 7, **characterized in that** a difference value (Δs) is continuously calculated from the distance (s_{ch0}) which the brake piston is supposed to run through and the distance (s_{ch}) which the brake piston has already run through.

10. Method according to Claim 8, **characterized in that** the current regulation of the electromotive braking apparatus is performed until the difference value (Δs) is at the value zero.

11. Control apparatus for adjusting the clamping force (F) which is exerted by a parking brake, **characterized in that** it has means for driving an electric motor (1) of the parking brake, means for driving an actuator (7) of a second braking apparatus (6, 7), and also means for carrying out a current regulation operation, with which means the motor current (i) of the electric motor (1) can be regulated at a substantially constant value in an operating phase (phase 4) in which the two braking apparatuses (1; 6, 7) exert force at the same time.

12. Control apparatus according to Claim 11, further comprising means for carrying out one of the methods claimed above.

## Revendications

1. Procédé pour régler la force de serrage (F) exercée par un frein de stationnement, la force de serrage (F) étant appliquée partiellement par un dispositif de freinage (1) à moteur électrique et partiellement par un deuxième dispositif de freinage (6, 7), **caractérisé en ce que**, lors d'une opération de serrage, dans une phase de fonctionnement (phase 4) dans laquelle les deux dispositifs de freinage (1 ; 6, 7) exercent simultanément une force, la consommation de courant (i) du dispositif de freinage (1) à moteur électrique est réglée à une valeur essentiellement constante.

2. Procédé selon la revendication 1, **caractérisé en ce que** le deuxième dispositif de freinage (6, 7) est un dispositif de freinage hydraulique ou pneumatique.

3. Procédé selon la revendication 1, **caractérisé en ce que** la consommation de courant (i) du dispositif de freinage à moteur électrique est réglée à l'aide d'un dispositif de réglage qui utilise l'actionneur du deuxième dispositif de freinage en tant qu'élément de réglage.

4. Procédé selon la revendication 1, **caractérisé en ce qu'**une course (s) parcourue par un piston de frein, une vitesse de rotation (ω) du moteur électrique ou une autre grandeur à partir de laquelle la force de serrage (F) peut être évaluée est calculée à partir de la valeur du courant (i).

5. Procédé selon l'une quelconque des revendications précédentes, **caractérisé en ce que**, lors d'une opération de serrage, dans une première phase de fonctionnement, le dispositif de freinage à moteur électrique fonctionne exclusivement et le dispositif de freinage hydraulique est activé approximativement lorsqu'une force de serrage cible déterminée (Fₘ) est atteinte.

6. Procédé selon l'une quelconque des revendications précédentes, **caractérisé en ce que**, dans une phase de fonctionnement, dans laquelle le dispositif de freinage à moteur électrique est actif exclusivement, la pente (m) de l'augmentation de la force de freinage est déterminée.

7. Procédé selon la revendication 5, **caractérisé en ce qu'**une course (s) parcourue par le piston de frein est calculée en tenant compte de la valeur du courant (i).

8. Procédé selon la revendication 6, **caractérisé en ce qu'**une course de consigne (s_{ch0}) est calculée à l'aide de la pente (m), laquelle course de consigne doit être parcourue par le piston de frein après qu'une force de freinage cible déterminée (Fₘ) a été atteinte.

9. Procédé selon la revendication 7, **caractérisé en ce qu'**une valeur de différence (Δs) est calculée en continu à partir de la course (s_{ch0}) à parcourir du piston de frein et de la course (s_{ch}) déjà parcourue du piston de frein.

10. Procédé selon la revendication 8, **caractérisé en ce que** le réglage du courant du dispositif de freinage à moteur électrique est effectué tant que la valeur de différence (Δs) présente la valeur zéro.

11. Dispositif de commande pour régler la force de serrage (F) exercée par un frein de stationnement, **caractérisé en ce qu'**il comprend des moyens pour commander un moteur électrique (1) du frein de stationnement, des moyens pour commander un actionneur (7) d'un deuxième dispositif de freinage (6, 7) ainsi que des moyens pour effectuer un réglage du courant, à l'aide desquels le courant (i) du moteur électrique (1) peut être réglé à une valeur essentiellement constante dans une phase de fonctionnement (phase 4) dans laquelle les deux dispositifs de freinage (1 ; 6, 7) exercent simultanément une force.

12. Dispositif de commande selon la revendication 11, comportant en outre des moyens pour mettre en oeuvre l'un des procédés revendiqués précédemment.
